# EUROPEAN PATENT APPLICATION

(11) **EP 1 747 871 A2**
(43) Date of publication of application: **31.01.2007**
(21) Application number: 06460022.4
(22) Date of filing: 19.07.2006
(51) Int. Cl.: B29C 39/10

(54) **A method for the production of a thermosetting cast and a retaining ring for the production of a thermosetting cast**

(30) Priority: 25.07.2005 PL 37628405
(71) Applicant: ABB Sp.zo.o., 04-713 Warszawa (PL)
(72) Inventor: Chromniak, Marcin, 30-611 Kraków (PL); Platek, Robert, 30-719 Kraków (PL); Nowak, Tomasz, 30-389 Kraków (PL)
(74) Representative: Chochorowska-Winiarska, Krystyna

(57) **Abstract**

The subject of the invention is a method for the production of a thermosetting cast and a retaining ring for the production of a thermosetting cast, applicable especially in the process of pouring liquid resin on electric and electric-power assemblies and subassemblies founded and fixed in a casting mould.

The inventive method is characterised in that the positioning of the casting parts in relation to one another is done outside the casting mould, by means of at least one retaining ring.

The inventive retaining ring is characterised in that it is comprised of a cylindrical mounting sleeve and radial arms attached to the cylindrical surface of the mounting sleeve.

## Description

The subject of the invention is a method for the production of a thermosetting cast and a retaining ring for producing a thermosetting cast, applicable especially in the process of pouring liquid resin on electric and electric-power assemblies and subassemblies founded and fixed in a casting mould, where the casting contains components positioned in relation to one another.

The resin pouring process is often used in electric and electric-power apparatus manufacturing processes. The active parts of electric apparatus are placed in a mould to which liquid epoxy resin is poured in order to provide them with adequate electric insulation and mechanical protection. Due to the complex shape and the number of active parts such as primary and secondary windings, magnetic cores, or terminals, the process of fixing these elements in the mould is itself quite complicated. Each element must be situated in a strictly defined way and fixed in relation to other elements - so that proper electric properties of the final product can be obtained. Now, fixing of elements in the mould is achieved by rigid and temporary fastening of elements to the mould walls. To this end bolted or knuckle joints are usually used and they immobilise the active parts in the mould for the time when the pouring process takes place. When the pouring process has been completed and resin has been prehardened, the fastening bolts and knuckles are released, whereupon the ready casting is removed from the mould. Where the electric apparatus is comprised of a large number of relatively heavy active parts, the operation of properly locating and fastening those elements in the mould is troublesome and time consuming since it requires the use of a large number of bolts and/or knuckles. A large number of connecting elements and a high temperature of the mould walls may reduce the precision of the assembly. Furthermore, fastening and releasing of the parts that are poured in the mould reduces the time of effective use of the mould.

The essence of the method for the production of a thermosetting cast according to the invention, comprising components fixed in relation to one another, is that the mutual position of the components is fixed outside the casting mould by means of at least one retaining ring comprising radial arms, which is secured between at least two components of the cast, whereupon the cast parts fixed in relation to one another are placed in the mould and at least one of the previously fixed parts is fastened to the cast walls, and then the cast forming process is carried out by a traditional method in the mould.

The essence of the retaining ring for producing a thermosetting cast according to the invention is that it is comprised of a cylindrical mounting sleeve and radial arms attached to the cylindrical surface of the mounting sleeve.

Preferably, the radial arms of the retaining ring are located on the outside circumference of the cylindrical mounting sleeve.

Preferably, the radial arms of the retaining ring are located on the inside circumference of the cylindrical mounting sleeve.

Preferably, the radial arms of the retaining ring are located on the outside and inside circumferences of the cylindrical mounting sleeve.

Preferably, the radial arms of the retaining ring are made of an elastically strained material.

Preferably, the radial arms and/or the mounting sleeve of the retaining ring are made of plastic.

Preferably, the retaining ring is made as a uniform casting or a moulding.

Preferably, a single radial arm has a shape similar to a cone or a truncated pyramid whose base is located on the cylindrical surface of the mounting sleeve.

Preferably, the radial arms of the retaining ring are situated perpendicularly to the longitudinal axis of the mounting sleeve.

Preferably, the radial arms of the retaining ring are tilted in relation to the perpendicular plane to the longitudinal axis of the mounting sleeve.

Preferably, a through gap is made on the cylindrical surface of the mounting sleeve of the retaining ring.

The advantage of the inventive method is a considerable reduction in the time of assembly of the products to be poured on in casting moulds and an increase in the accuracy of positioning the elements of the cast product.

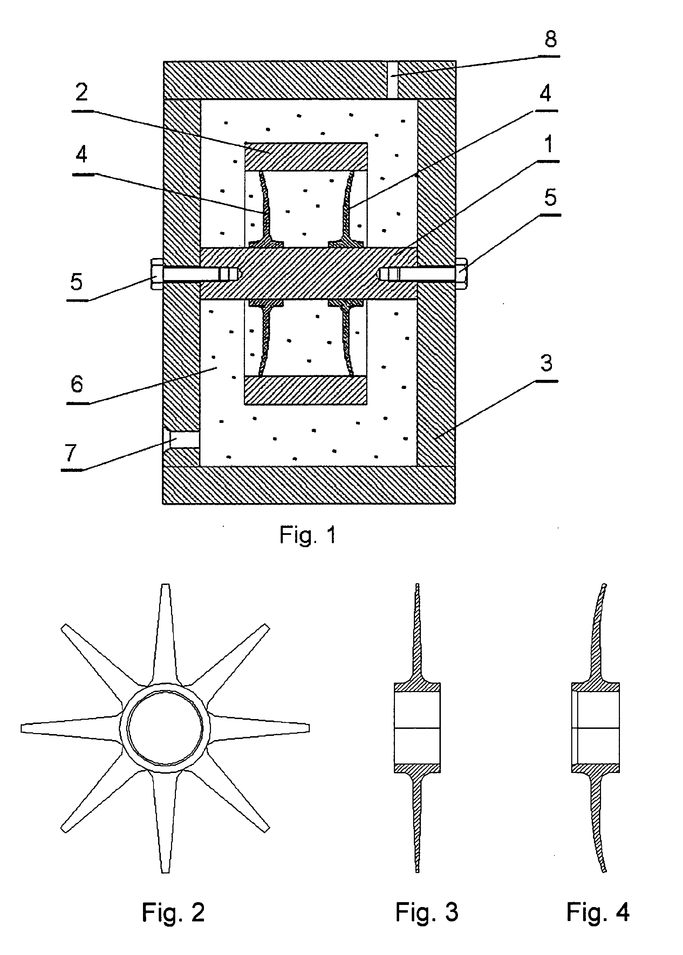

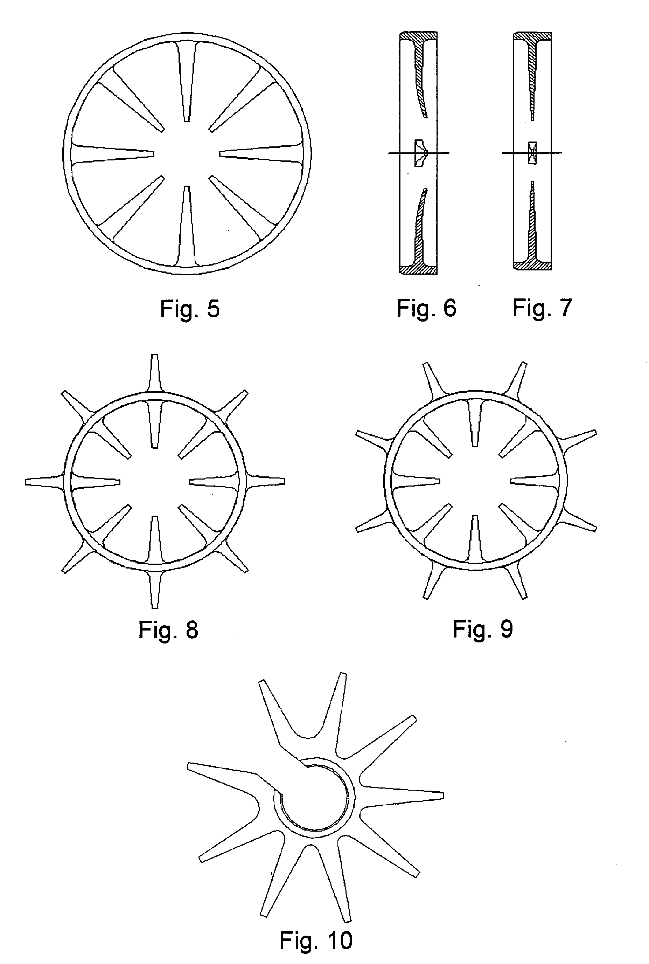

The inventive method is illustrated by an embodiment example in the drawing where fig. 1 shows schematically a casting mould with the casting in which the active part is fixed to the side walls of the mould, fig. 2 - the front view of the first embodiment of the retaining ring, fig. 3 - the longitudinal section of the first version of the embodiment of the ring from fig. 2, fig. 4 - the longitudinal section of the second version of the embodiment of the ring from fig. 2, fig. 5 - a front view of the second embodiment of the retaining ring, fig. 6 - the longitudinal section of the first version of the embodiment of the ring from fig. 5, fig. 7 - the longitudinal section of the second embodiment of the ring from fig. 5, fig. 8 - a front view of the third embodiment of the retaining ring, fig. 9 - a front view of the fourth embodiment of the retaining ring, and fig.10 - a front view of an embodiment of the ring with the gap.

In the method implemented according to the invention, the mutual positioning of active parts 1 and 2 is done outside the casting mould 3 using special retaining rings 4. The rings 4 are placed between different active parts 1 and 2, which allows to maintain strictly defined distances between these parts. The retaining rings 4 comprise a cylindrical mounting sleeve which is placed on the active part of the casting, and arms attached to its cylindrical surface. The mounting sleeve can have a longitudinal gap which facilitates the fixing of the ring 4 on the active part 1, which is shown in fig. 10. The mounting sleeve and the arms of the retaining rings 4 are made of a resilient material, preferably of plastic, which enables the deformation of the arms and their intrinsic adjustment to different dimensions of the joined parts. Preferably the retaining ring 4 is made as a uniform casting or moulding. In one of the invention embodiment varieties, the arms are located on the outside cylindrical part of the mounting sleeve, as shown in fig. 2. In another variety of the invention embodiment, shown in fig. 5, the arms are connected with the inside cylindrical surface of the mounting sleeve. In still another embodiment, the arms are placed both on the inside and outside cylindrical surfaces of the mounting sleeve, which is shown in fig. 8 and fig. 9. The preassembled parts 1 and 2, positioned in relation to each other by means of the ring 4, are inserted into the mould 3. Then the active part 1 is attached to the walls of the mould 3 or to its cover by means of bolts 5. In such case there is no need to attach all the other active parts to the mould. The arms of the retaining rings are shaped in such way that during the resin 6 pouring process its flow is not restrained and resin 6 can freely fill the whole cavity of the mould 3. Preferably, the arms have a shape similar to a cone or a truncated pyramid whose base is located on the cylindrical surface of the mounting sleeve. The arms are situated perpendicularly to the longitudinal axis of the mounting sleeve as shown in fig. 3 and 7, or they are tilted in relation to the perpendicular plane to the longitudinal axis of the mounting sleeve, which is shown in fig. 4 and 6. In such case, each of the arms is tilted in the direction conforming with the flow of the liquid thermosetting material in the mould or in the direction facilitating the assembly of the active parts. When the resin 6 has been hardened, the mounting bolts 5 are released and the finished casting is taken out of the mould 3. The runner 7, placed in the side wall of the casting mould 3 and the degassing duct 8 placed in the cover of the mould 3 are indicated in the drawing. In a finished casting, the retaining rings remain an integral part of the product. Their presence in the product does not affect the functionality of the finished cast product, but it allows a considerable reduction in the time of assembly and an improvement in the accuracy of positioning the active elements. In addition, it allows an increase in the effective time of use of the mould.

## Claims

1. A method for the production of a thermosetting cast containing components positioned in relation to one another, **characterised in that** the mutual positioning of the various parts of the cast is done outside the casting mould (3) by means of at least one retaining ring (4) containing radial arms, which is fixed between at least two component parts (1) and (2) of the cast, after which the casting parts fixed in relation to one another are placed in a casting mould (3) and at least one of the previously positioned parts is attached to its walls and then the process of forming the casting in the casting mould (3) is carried out in the traditional way.

2. A retaining ring for the production of a thermosetting cast, **characterised in that** it is comprised of a cylindrical mounting sleeve and radial arms attached to the cylindrical surface of the mounting sleeve.

3. A retaining ring according to claim 2, **characterised in that** the radial arms are situated on the external circumference of the cylindrical mounting sleeve.

4. A retaining ring according to claim 2, **characterised in that** the radial arms are located on the internal circumference of the cylindrical mounting sleeve.

5. A retaining ring according to claim 2, **characterised in that** the radial arms are situated on the external and internal circumference of the cylindrical mounting sleeve.

6. A retaining ring according to claim 2, **characterised in that** the radial arms are made of an elastically strained material.

7. A retaining ring according to claim 2, **characterised in that** the radial arms and/or the mounting sleeve are made of plastic.

8. A retaining ring according to claim 2, **characterised in that** the retaining ring is made as a uniform casting or moulding.

9. A retaining ring according to claim 2, **characterised in that** a single radial arm has a shape similar to a cone or a truncated pyramid whose base is located on the cylindrical surface of the mounting sleeve.

10. A retaining ring according to claim 2, **characterised in that** the radial arms are situated perpendicularly to the longitudinal axis of the mounting sleeve.

11. A retaining ring according to claim 2, **characterised in that** the radial arms are tilted in relation to the perpendicular plane to the longitudinal axis of the mounting sleeve.

12. A retaining ring according to claim 2, **characterised in that** a through gap is made on the cylindrical surface of the mounting sleeve of the retaining ring.
